# EUROPÄISCHE PATENTSCHRIFT

(11) **EP 1 799 735 B1**
(45) Veröffentlichungstag und Bekanntmachung des Hinweises auf die Patenterteilung: **23.07.2008**
(21) Anmeldenummer: 05785663.5
(22) Anmeldetag: 20.09.2005
(51) Int. Cl.: C08G 18/48, C08G 18/10, C08G 65/26

(54) **VERFAHREN ZUR HERSTELLUNG VON POLYURETHAN-WEICHSCHAUMSTOFFEN**
METHOD FOR PRODUCING FLEXIBLE POLYURETHANE FOAMS
PROCEDE POUR PRODUIRE DES MOUSSES SOUPLES DE POLYURETHANE

(30) Priorität: 28.09.2004 DE 102004047406
(43) Veröffentlichungstag der Anmeldung: 27.06.2007
(73) Patentinhaber: BASF SE, 67056 Ludwigshafen (DE)
(72) Erfinder: HARRE, Kathrin, 01109 Dresden (DE); RUPPEL, Raimund, 01099 Dresden (DE); ELING, Berend, 49448 Lemförde (DE)
(86) Internationale Anmeldenummer: PCT/EP2005/010121
(87) Internationale Veröffentlichungsnummer: WO 2006/034799

(56) Entgegenhaltungen:
- WO-A-01/57104
- WO-A-97/23530
- WO-A-97/27236
- WO-A-99/51657
- US-A1- 2004 147 627

## Beschreibung

Gegenstand der Erfindung ist ein Verfahren zur Herstellung von Polyurethan-Weichschaumstoffen, insbesondere Kalt-Formweichschaumstoffen.

Polyurethan-Weichschaumstoffe sowie ihre Herstellung durch Umsetzung von Polyisocyanaten mit Verbindungen mit mindestens zwei mit Isocyanatgruppen reaktiven Wasserstoffatomen sind seit langem bekannt.

Zumeist werden für derartige Anwendungen Polyetheralkohole eingesetzt, die einen Endblock aus Ethylenoxideinheiten, üblicherweise mit einem Gehalt von 5 bis 25 Gew.-%, bezogen auf das Gewicht des Polyetheralkohols, und 70-90 % primäre Hydroxylgruppen aufweisen, um eine ausreichende Reaktivität des Polyols zu gewährleisten. Typische Hydroxylzahlen derartiger Polyole liegen im Bereich zwischen 25 und 35 mg KOH/g. Die genannten Polyetheralkohole werden üblicherweise durch Anlagerung von Alkylenoxiden an H-funktionelle Startsubstanzen, insbesondere 2- und/oder 3-funktionelle Alkohole hergestellt.

In letzter Zeit werden als Katalysatoren für die Anlagerung von Alkylenoxiden an H-funktionelle Startsubstanzen häufig Multimetallcyanidverbindungen, auch als DMC-Katalysatoren bezeichnet, eingesetzt. Durch den Einsatz von DMC-Katalysatoren können Polyetheralkohole erhalten werden, die sich durch einen verringerten Gehalt an ungesättigten Bestandteilen auszeichnen. Ein weiterer Vorteil beim Einsatz von DMC-Katalysatoren ist die im Vergleich zu basischen Katalysatoren höhere Raum-ZeitAusbeute. Dem stehen jedoch auch Nachteile gegenüber. Ein wesentlicher Nachteil ist die Bildung von sehr hochmolekularen Bestandteilen im Polyol, die sich bei der Verschäumung sehr negativ auswirken. Ein weiterer Nachteil besteht darin, dass nur Propylenoxid und Mischungen aus Propylenoxid und Ethylenoxid gleichmäßig angelagert werden können. Bei der Anlagerung von reinem Ethylenoxid entstehen Produkte mit einer sehr breiten Molgewichtsverteilung. Derartige Polyole sind zumeist trüb, haben eine erhöhte Viskosität, bei der Herstellung der Schäume kommt es zu Verarbeitungsschwierigkeiten, die resultierenden Schäume weisen eine erhöhte Hydrolyseanfälligkeit auf.

Um diesen Mangel zu beheben, wird beispielsweise in EP 1,403,301, EP 1,199,323, WO 91/18909, EP 1,277,775 und WO 03/59980 vorgeschlagen, zunächst mit DMC-Katalysatoren Propylenoxid oder Mischungen aus Ethylenoxid und Propylenoxid anzulagern, den so erhaltenen Zwischenprodukten basische Katalysatoren zuzusetzen und Ethylenoxid anzulagern. Nachteilig an diesem Verfahren ist insbesondere, dass ein zusätzlicher Verfahrensschritt notwendig ist, sowie dass der basische Katalysator aufwendig aus dem Produkt entfernt werden muss, während der DMC-Katalysator zumeist im Produkt verbleiben kann.

Aufgabe der Erfindung war es, ein Verfahren zur Herstellung von Polyurethan-Weichschaumstoffen, insbesondere von Polyurethan-Formweichschaumstoffen, mit einer guten Luftdurchlässigkeit und einer hohen Rückprallelastizität zu entwickeln, bei dem ein Polyetheralkohol eingesetzt werden kann, der unter Verwendung von DMC-Katalysatoren herstellbar ist.

Überraschenderweise wurde gefunden, dass mittels DMC-Katalysatoren hergestellte Polyetheralkohole bei der Herstellung ein Verhalten zeigen wie klassische Polyetheralkohole mit einem Endblock aus reinen Ethylenoxideinheiten, wenn sie eine Hydroxylzahl im Bereich von 15 bis 35 mgKOH/g, einen Gehalt an Ethylenoxid im Bereich von 5 bis 18 Gew.-%, bezogen auf das Gesamtgewicht des Polyetheralkohols, und einen Endblock aus Ethylenoxid und Propylenoxid mit einem Gehalt an Ethylenoxid von 25 bis 75 Gew.-%, bezogen auf die Menge des Alkylenoxids im Endblock, aufweisen.

Gegenstand der Erfindung ist demzufolge ein Verfahren zur Herstellung von Polyurethan-Weichschaumstoffen, insbesondere von Polyurethan-Formweichschaumstoffen, durch Umsetzung von a) Polyisocyanaten mit b) Verbindungen mit mindestens zwei mit Isocyanatgruppen reaktiven Wasserstoffatomen, dadurch gekennzeichnet, dass als Verbindungen mit mindestens zwei mit Isocyanatgruppen reaktiven Wasserstoffatomen b) mindestens ein mittels DMC-Katalysator hergestellter Polyetheralkohol b1) mit einer Hydroxylzahl im Bereich von 15 bis 35 mgKOH/g, einem Gehalt an Ethylenoxid im Bereich von 5 bis 18 Gew.-%, bezogen auf das Gesamtgewicht des Polyetheralkohols, und einem Endblock aus Ethylenoxid und Propylenoxid mit einem Gehalt an Ethylenoxid von 25 bis 75 Gew.-%, bezogen auf die Menge des Alkylenoxids im Endblock, wobei das Masseverhältnis von Propylenoxid zu Ethylenoxid im Endblock im Verlaute der Dosierung von 1:0,05 bis 1:2 am Beginn der Dosierung auf 1:5 bis 1:20am Ende der Dosierung verringert wird, eingesetzt wird.

Vorzugsweise haben die erfindungsgemäß eingesetzten Polyetheralkohole b1) eine Funktionalität zwischen 2 und 3. Der Anteil an primären Hydroxylgruppen liegt vorzugsweise im Bereich zwischen 15 und 50 Mol.-%. Die primären Hydroxylgruppen resultieren von Ethylenoxid-Einheiten.

Der Anteil des Endblocks am Gesamtgewicht des Polyetheralkohols b1) liegt insbesondere zwischen 5 und 50 Gew.-%, vorzugsweise im Bereich zwischen 10 und 30 Gew.-%, bezogen auf das Gesamtgewicht des Polyetheralkohols.

In der vorliegenden Erfindung wird der Endblock der Polyetheralkohole b1) angelagert, indem im Verlaufe der Anlagerung das Verhältnis der beiden Alkylenoxide zueinander verändert wird. Eine derartige Fahrweise wird in WO 01/44347 beschrieben. Bei der Herstellung der erfindungsgemäß eingesetzten Polyetheralkohole wird im Verlaufe der Dosierung des Endblocks der Anteil des Ethylenoxids in der Mischung gegenüber dem Anteil des Propylenoxids er-höht. Vorzugsweise wird der Anteil des Ethylenoxids in der Mischung von mindestens 5 Gew.-% auf höchstens 95 Gew.-% variiert.

Die Herstellung der Polyetheralkohole b1) erfolgt, wie oben beschrieben, durch Anlagerung von Alkylenoxiden an H-funktionelle Startsubstanzen unter Verwendung von Multimetallcyanidverbindungen, häufig auch als DMC-Katalysatoren bezeichnet. Derartige Verbindungen sind bekannt und werden beispielsweise in EP-A 1 053 787 oder in EP-A 0 755 716 beschrieben.

Als H-funktionelle Startsubstanzen kommen vorzugsweise 2- und/oder dreifunktionelle Alkohole zum Einsatz. Bevorzugt werden Alkohole mit einem Molekulargewicht im Bereich zwischen 62 und 400 g/mol eingesetzt. Bevorzugt kommen zum Einsatz Glyzerin, Trimethylolpropan, Ethylenglykol, Propylenglykol, Diethylenglkol, Dipropylenglykol, Butandiol sowie beliebige Mischungen aus mindestens zwei der genannten Alkohole. Insbesondere werden Glyzerin und/oder Ethylenglykol eingesetzt.

Um eine Verzögerung des Anspringens der Reaktion, auch als Induktionsperiode bezeichnet, zu vermeiden, werden häufig Umsetzungsprodukte der beschriebenen niederen Alkohole mit Alkylenoxiden eingesetzt. Diese Umsetzungsprodukte haben zumeist ein Molekulargewicht im Bereich zwischen 400 und 1000 g/mol. Diese Umsetzungsprodukte werden vorzugsweise durch übliche basisch katalysierte Anlagerung von Alkylenoxiden an die genannten Alkohole hergestellt. Um eine Schädigung des DMC-Katalysators zu vermeiden, muss der basische Katalysator vollständig aus dem Umsetzungsprodukt entfernt werden.

Die Herstellung der Polyetheralkohole b1) kann nach unterschiedlichen Verfahrensweisen erfolgen.

Eine Möglichkeit ist die batchweise Herstellung. Dazu werden im Reaktor, zumeist einem Rührkessel, die Startsubstanz und der Katalysator vorgelegt, aktiviert und nach Anspringen der Reaktion das Alkylenoxid zudosiert. Dabei werden die einzelnen Segmente der Polyetherkette nacheinander dosiert, wobei zwischen diesen Dosierungen zumeist eine Nachreaktionsphase zur vollständigen Abreaktion der noch im Reaktor befindlichen monomeren Alkylenoxide eingehalten wird.

In einer besonderen Ausführungsform des batchweisen Verfahrens wird zumindest zeitweise neben den Alkylenoxiden niedermolekularer Alkohol dosiert. Vorzugsweise erfolgt die Dosierung von weiterem Alkohol nur während der Dosierung des ersten Segments der Polyetherkette, um eine gleichmäßige Zusammensetzung des Polyetheralkohols zu gewährleisten. Die zusätzliche Dosierung von Alkohol ist beispielsweise beschrieben in EP 879 259.

In einer weiteren Ausführungsform der Herstellung der Polyetheralkohole b1) werden alle oder einige Segmente der Polyetherkette nach einem kontinuierlichen Verfahren angelagert. Dazu werden in einen kontinuierlichen Reaktor, beispielsweise einen Rührkessel oder einen Rohrreaktor, kontinuierlich das Zwischenprodukt und Alkylenoxide zugegeben und kontinuierlich das Endprodukt entnommen. Auch die Kombination des genannten Verfahrens mit der parallelen Dosierung niedermolekularer Alkohole ist möglich. Verfahren zur kontinuierlichen Herstellung von Polyetheralkoholen mittels DMC-Katalysatoren sind beispielsweise beschrieben in WO 98/03571.

Die Herstellung der Polyetheralkohole b1) erfolgt bei den üblichen Bedingungen. Zu Beginn der Umsetzung wird die Startsubstanz vorgelegt und, soweit notwendig, Wasser und andere leicht flüchtige Verbindungen entfernt. Dies erfolgt zumeist durch Destillation, vorzugsweise unter Vakuum. Dabei kann der Katalysator bereits in der Startsubstanz vorhanden sein, es ist jedoch auch möglich, den Katalysator erst nach der Behandlung der Startsubstanz zuzusetzen. Bei der letztgenannten Variante wird der Katalysator thermisch weniger belastet. Vor der Dosierung der Alkylenoxide ist es üblich, den Reaktor zu inertisieren, um unerwünschte Reaktionen der Alkylenoxide mit Sauerstoff zu vermeiden. Danach erfolgt die Dosierung der Alkylenoxide beziehungsweise der Mischung aus Alkylenoxiden und Startsubstanz, wobei die Anlagerung in der oben beschriebenen Weise durchgeführt wird. Die Anlagerung der Alkylenoxide erfolgt zumeist bei Drücken im Bereich von 0,01 bar und 10 bar und Temperaturen im Bereich von 50 bis 200°C, vorzugsweise 90 bis 150°C. Es hat sich gezeigt, dass die Geschwindigkeit, mit der die Alkylenoxide dosiert werden, ebenfalls einen Einfluss auf die Reaktivität der entstehenden Polyetheralkohole hat. Je schneller die Alkylenoxide dosiert werden, desto höher ist die Reaktivität der resultierenden Polyetheralkohole.

In einer bevorzugten Ausführungsform der Herstellung der Polyetheralkohole b1) wird bei der gemeinsamen Dosierung von Ethylenoxid und Propylenoxid das Mengenverhältnis der Alkylenoxide untereinander in Verlaufe der Dosierung geändert. Dieses Verfahren wird beispielsweise in WO 01/44347 beschrieben und auch als dynamische Dosierung bezeichnet. Bevorzugt wird die dynamische Dosierung bei der Herstellung der für das erfindungsgemäße Verfahren eingesetzten Polyetheralkohole zur Anlagerung des Endblocks eingesetzt. Dabei wird die dynamische Dosierung vorzugsweise so ausgestaltet, dass der Anteil des Propylenoxids im Gemisch im Verlauf der Dosierung reduziert wird. Vorzugsweise wird dabei das Masseverhältnis von Propylenoxid zu Ethylenoxid in dem dynamischen Block von 1:0,05 bis 1:2 am Beginn der Dosierung auf 1: 5 bis 1:20 am Ende der Dosierung verringert. In diesem Bereich ist der Anteil an primären Hydroxylgruppen im Polyetheralkohol besonders günstig.

Nach der Anlagerung der Alkylenoxide wird zumeist eine Nachreaktionsphase zur vollständigen Umsetzung der Alkylenoxide angeschlossen. Danach werden nicht umgesetzte Monomere und leichtflüchtige Verbindungen aus der Reaktionsmischung entfernt, üblicherweise mittels Destillation. Der DMC-Katalysator kann üblicherweise im Polyetheralkohol verbleiben, es ist jedoch prinzipiell möglich, ihn ganz oder teilweise zu entfernen, beispielsweise mittels Filtration. Der fertige Polyetheralkohol wird üblicherweise gegen thermooxidativen Abbau stabilisiert, zumeist durch Zusatz von Antioxidantien, wie sterisch gehinderten Aminen oder Phenolen.

Die beschriebenen Polyetheralkohole b1) können allein oder im Gemisch mit anderen Verbindungen mit mindestens zwei mit Isocyanatgruppen reaktiven Wasserstoffatomen zu Polyurethan-Weichschaumstoffen umgesetzt werden.

Die Herstellung der erfindungsgemäßen Polyurethan-Weichschaumstoffe erfolgt durch Umsetzung der Polyetheralkohole b1) mit Polyisocyanaten. Die Umsetzung erfolgt üblicherweise in Anwesenheit von Treibmitteln, Katalysatoren und üblichen Hilfs- und/oder Zusatzstoffen.

Zu den verwendeten Einsatzstoffen ist im einzelnen folgendes zu sagen.

Als Polyisocyanate kommen hierbei alle Isocyanate mit zwei oder mehreren Isocyanatgruppen im Molekül zum Einsatz. Dabei können aliphatische Isocyanate, wie Hexamethylendiisocyanat (HDI) oder Isophorondiisocyanat (IPDI), oder vorzugsweise aromatische Isocyanate, wie Toluylendiisocyanat (TDI), Diphenylmethandiisocyanat (MDI) oder Mischungen aus Diphenylmethandiisocyanat und Polymethylenpolyphenylenpolyisocyanaten (Roh-MDI) verwendet werden. Es ist auch möglich, Isocyanate einzusetzen, die durch den Einbau von Urethan-, Uretdion-, Isocyanurat-, Allophanat-, Uretonimin- und anderen Gruppen modifiziert wurden, sogenannte modifizierte Isocyanate.

Vorzugsweise werden als Polyisocyanate a) TDI oder MDI, seine höheren Homologen und/oder dessen Umsetzungsprodukte mit Verbindungen mit mindestens zwei mit Isocyanatgruppen reaktiven Wasserstoffatomen eingesetzt.

Für die Herstellung von Blockweichschaumstoffen wird insbesondere TDI eingesetzt, während bei der bevorzugten Herstellung von Formschäumen vorzugsweise MDI und seine höheren Homologen eingesetzt werden.

Als Verbindungen mit mindestens zwei mit Isocyanatgruppen reaktiven Gruppen, die, falls erforderlich, im Gemisch mit den Polyetheralkoholen b1) eingesetzt werden, können vorzugsweise Polyole verwendet werden. Unter den Polyolen haben die Polyetherpolyole und die Polyesterpolyole die größte technische Bedeutung. Die zur Herstellung von Polyurethanen eingesetzten Polyetherpolyole werden zumeist durch basisch katalysierte Anlagerung von Alkylenoxiden, insbesondere Ethylenoxid und/oder Propylenoxid, an H-funktionelle Startsubstanzen hergestellt. Polyesterpolyole werden zumeist durch Veresterung von mehrfunktionellen Carbonsäuren mit mehrfunktionellen Alkoholen hergestellt. Die eingesetzten Polyole weisen vorzugsweise eine Hydroxylzahl im Bereich zwischen 20 und 100 mgKOH/g und eine Funktionalität im Bereich zwischen 2 und 4 auf.

In einer besonderen Ausführungsform der Erfindung kann die Komponente b) mindestens ein sogenanntes Graftpolyol enthalten. Derartige Polyole werden durch in-situ-Polymerisation von ethylenisch ungesättigten Monomeren, insbesondere Styrol und/oder Acrylnitril, in Trägerpolyolen, vorzugsweise Polyetheralkoholen, hergestellt. Die Polymerisation erfolgt üblicherweise in Anwesenheit von Initiatoren, Polymerisationsreglem und Polyolen mit eingebauten ethylenisch ungesättigten Bindungen, häufig auch als Makromere bezeichnet. Derartige Polyole sind seit langem bekannt und beispielsweise in WO 03/78496 beschrieben. Für das erfindungsgemäße Verfahren bevorzugte Graft-Polyole haben eine Hydroxylzahl im Bereich zwischen 10 und 50 mg KOH/g, eine Funktionalität von 2 bis 3 und einen Gehalt an Feststoffen von 35 bis 50 Gew.-%. Unter Verwendung von Graft-Polyolen hergestellte Schäume zeichnen sich durch eine höhere Härte und eine verbesserte Offenzelligkeit aus.

In einer anderen Ausführungsform der Erfindung kann die Komponente b) mindestens einen aminterminierten Polyether enthalten. Die Polyetherkette dieser Verbindungen enthält vorzugsweise nur Propylenoxideinheiten. Derartige Produkte sind seit langem bekannt und werden z.B. von der Firma Huntsman hergestellt und unter dem Markennamen Jeffamine^{®} vertrieben. Bevorzugt sind das difunktionelle Jeffamin^{®} D2000, mit einer Molmasse von 2000 und das trifunktionelle Jeffamin^{®}T5000 mit einer Molmasse von 5000. Die unter Verwendung dieser aminterminierten Polyether hergestellte Polyurethanschäume zeichnen sich durch ein verbessertes Processing und eine verbesserte Offenzelligkeit aus.

Weiterhin können bevorzugt andere Polyole zugesetzt werden, wie Polypropylenglykole oder Polyethylenglykole mit Molmassen von 400-4000 g/mol oder Ethylenoxid-Propylenoxid-Polyether-Polyole mit einem Ethylenoxidgehalt von 50-80 % und Hydroxylzahlen von 28-55 mg KOH/g. Solche Polyole werden eingesetzt zur Verbesserung des Processing und der mechanischen Eigenschaften. Diese Polyole können unter Verwendung von DMC oder KOH als Katalysator hergestellt werden

Zu den Verbindungen mit mindestens zwei mit Isocyanatgruppen reaktiven Gruppen gehören auch die Kettenverlängerer und/oder Vernetzer, die gegebenenfalls mit eingesetzt werden können. Dabei handelt es sich um mindestens zweifunktionelle Amine und/oder Alkohole mit Molekulargewichten im Bereich von 60 bis 400 g/mol.

Als Treibmittel werden zumeist Wasser, bei der Reaktionstemperatur der Urethanreaktion gasförmige, gegenüber den Ausgangsstoffen der Polyurethane inerte Verbindungen, sogenannte physikalisch wirkende Treibmittel, sowie Gemische daraus eingesetzt. Als physikalisch wirkende Treibmittel werden zumeist Kohlenwasserstoffe mit 2 bis 6 Kohlenstoffatomen, halogenierte Kohlenwasserstoffe mit 2 bis 6 Kohlenstoffatomen, Ketone, Acetale, Ether, Inertgase wie Kohlendioxid oder Edelgase eingesetzt.

Als Katalysatoren werden vorzugsweise Aminverbindungen und/oder Metallverbindungen, insbesondere Schwermetallsalze und/oder metallorganische Verbindungen, eingesetzt. Insbesondere werden als Katalysatoren bekannte tertiäre Amine und/oder mit organische Metallverbindungen verwendet. Als organische Metallverbindungen kommen z.B. Zinnverbindungen in Frage, wie beispielsweise Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Als für diesen Zweck übliche organische Amine seien beispielhaft genannt: Triethylamin, 1,4-Diazabicyclo-[2.2.2]-oktan, Tributylamin, Dimethylbenzylamin, N,N,N',N'-Tetramethylethylendiamin, N,N,N',N'-Tetramethyl-butandiamin, N,N,N',N'-Tetramethylhexan-1,6-diamin, Dimethylcyclohexylamin. Die beschriebenen Katalysatoren können einzeln oder in Form von Mischungen eingesetzt werden.

Als Hilfsmittel und/oder Zusatzstoffe werden beispielsweise Trennmittel, Flammschutzmittel, Farbstoffe, Füllstoffe und/oder Verstärkungsmittel verwendet.

In der Technik ist es üblich, alle Einsatzstoffe mit Ausnahme der Polyisocyanate zu einer sogenannten Polyolkomponente zu vermischen und diese mit den Polyisocyanaten zum Polyurethan umzusetzen.

Die Herstellung der Polyurethane kann nach dem sogenannten one-shot-Verfahren oder nach dem Prepolymerverfahren erfolgen.

Eine Übersicht über die Einsatzstoffe für die Herstellung von Polyurethanen sowie die dazu angewendeten Verfahren findet sich beispielsweise im Kunststoffhandbuch, Band 7 "Polyurethane", Carl-Hanser-Verlag München Wien, 1. Auflage 1966, 2. Auflage 1983 und 3. Auflage 1993.

Die nach dem erfindungsgemäßen Verfahren hergestellten Polyurethan-Weichschaumstoffe zeichnen sich durch eine hohe Luftdurchlässigkeit und gute mechanische Eigenschaften, insbesondere eine hohe Rückprallelastizität, aus.

Die Erfindung soll an den nachfolgenden Beispielen näher erläutert werden.

### Beispiel 1 (Herstellung der Polyetheralkohole)

Die Synthese wurde in einem gereinigten und getrockneten 10 Liter-Rührautoklaven durchgeführt. Es wurde die entsprechend der gewünschten Hydroxylzahl nötige Menge an Starterverbindung, berechnet nach: Menge = 8 kg * Ziel-OHZ / Starter-OHZ in den Rührkessel gegeben und mit 125 ppm einer Multimetallcyanidverbindung, hergestellt aus Zinkacetat und Hexacyanocobaltsäure im Beisein eines oberflächenaktiven Mittels gemäß Beispiel 1 der EP 0 862 947, versetzt. Die Starterverbindung war in den Beispielen 1 bis 18 (trifunktionelle Polyole) der Tabelle 1 ein Glycerin-Propoxylat mit einer OHZ von 142 mg KOH/g, im Beispiel 19 (difunktionelles Polyol) ein Propylenglykol-Propoxylat der OHZ 240 mg KOH/g, beide jeweils hergestellt durch KOH-Katalyse mit nachfolgender Entfernung des basischen Katalysators.

Der Kesselinhalt wurde mit Stickstoff inertisiert und insgesamt 1 Stunde bei 120°C im Vakuum behandelt. Bei 120°C wurden mit den in der Tabelle angegebenen Dosierraten die angegebenen Mengen an Alkylenoxiden dosiert. Nach Abschluss der Dosierung wurde nachgerührt bis zur Druckkonstanz und danach die Reaktionsmischung bei 105°C und 10 mbar entgast. Das resultierende Produkt wurde vor der weiteren Verwendung mit 500 ppm Irganox 1135 als Antioxidans versetzt.

Die Kennwerte der resultierenden Polyetheralkohole sind ebenfalls der Tabelle zu entnehmen.

Die Bestimmung der Kennwerte erfolgte nach folgenden Methoden:

Die Bestimmung des Gehalts an primären Hydroxylgruppen aus Ethylenoxid und Propylenoxid erfolgte durch Derivatisierung der Hydroxylgruppen des Polyetheralkohols mit Trichloracetylisocyanat und nachfolgende Messung mit einem NMR-Spektrometer BRUKER DPX 250 mit z-shielded inversem Probenkopf 5 mm. Dabei haben die primären Hydroxylgruppen aus Ethylenoxid, die primären Hydroxylgruppen aus Propylenoxid und die sekundären Hydroxylgruppen unterschiedliche Peaks. In der Tabelle 1 sind jeweils die primären Hydroxylgruppen aus Ethylenoxid-Einheiten angegeben. Die Viskosität der Polyole wurde bei 25°C gemäß DIN 53018 und 53019 bestimmt, die Hydroxylzahlen nach DIN 53240.

**Tabelle 1**

| Polyole gemäß der Erfindung: | | | | | | | | |
|---|---|---|---|---|---|---|---|---|
| | | Zusammensetzung | | | Dosierrate im dyn. Block | | | |
| Beispiel Nr. | OHZ | PO core | PO tip | EO tip | PO-PO(*) | EO-EO(**) 1°OH | | Visc |
| | mgKOH/ g | %* | %* | %* | kg/h- kg/h | kg/h- kg/h | %** | mPa.s |
| 1 | 26 | 82 | 6 | 10 | 0,5-0,1 | 0,1-0,99 | 29 | 1300 |
| 2 | 32 | 76 | 8 | 14 | 0,5-0,1 | 0,5-0,5 | 31 | 1390 |
| 3 | 26 | 72 | 10 | 16 | 0,5-0,1 | 0,5-0,5 | 36 | 1290 |
| 4 | 32 | 82 | 6 | 10 | 0,5-0,1 | 0,5-0,5 | 27 | 1370 |
| 5 | 24 | 76 | 6 | 16 | 0,5-0,1 | 0,1-1,73 | 31 | 1840 |
| 6 | 24 | 74 | 14 | 10 | 0,5-0,1 | 0,1-0,33 | 26 | 1450 |
| 7 | 31 | 82 | 6 | 10 | 0,5-0,1 | 0,5-0,5 | 26 | 1600 |
| 8 | 24 | 82 | 6 | 10 | 0,5-0,1 | 0,1-0,92 | 29 | 1710 |
| 9 | 22 | 82 | 6 | 10 | 0,5-0,1 | 0,1-0,92 | 31 | 1640 |
| 10 | 21 | 78 | 6 | 14 | 0,5-0,1 | 0,7-0,7 | 32 | 1870 |
| 11 | 23 | 78 | 6 | 14 | 0,5-0,1 | 0,3-1,13 | 31 | 2080 |
| 12 | 22 | 74 | 6 | 18 | 0,5-0,1 | 0,9-0,9 | 40 | 2660 |
| 13 | 22 | 74 | 6 | 18 | 0,5-0,1 | 0,3-1,54 | 40 | 3000 |
| 14 | 22 | 72 | 16 | 10 | 0,5-0,1 | 0,19-0,19 | 28 | 1870 |
| 15 | 21 | 72 | 16 | 10 | 0,5-0,1 | 0,1-0,24 | 25 | 1830 |
| 16 | 22 | 62 | 23 | 14 | 0,5-0,1 | 0,2-0,2 | 21 | 1790 |
| 17 | 20 | 68 | 20 | 12 | 0,5-0,1 | 0,2-0,2 | 22 | 2020 |
| 18 | 25 | 67 | 20 | 12 | 0,5-0,1 | 0,2-0,2 | 21 | 1410 |
| 19 | 20 | 72 | 16 | 10 | 0,5-0,1 | 0,1-0,25 | 24 | 1310 |

| | | | | | | | | |
|---|---|---|---|---|---|---|---|---|
| * bezogen auf das Gewicht des Polyetheralkohols ** primäre Hydroxylgruppen von Ethylenoxid Core - Innenblock Tip - Endblock Dosierrate im Dynamischen Block, wobei: (*) Dosierrate PO zu Beginn und Dosierrate PO am Ende, beide in kg/h (**) Dosierrate EO zu Beginn und Dosierrate EO am Ende, beide in kg/h, bedeuten. | | | | | | | | |

### Polyole der Vergleichsbeispiele:

| Vergleichs | | Zusammensetzung | | | Dosierraten dyn Block | | | |
|---|---|---|---|---|---|---|---|---|
| Beispiel Nr. | OHZ | PO core | PO tip | EO tip | PO-PO | EO-EO | 1°OH | Visc |
| | mg KOH/g | %* | %* | %* | kg/h-kg/h | kg/h-kg/h | %** | mPas |
| I | 55 | 76 | 8 | 13 | 0,5-0,1 | 0,5-0,5 | 34 | 580 |
| II | 35 | 54 | 11 | 33 | 2,5-0,1 | 3,9 | 56 | 1720 |
| III | 34 | 54 | 11 | 33 | 0,5-0,1 | 0,9 | 54 | 1580 |
| IV | 34 | 68 | 11 | 19 | 0,5-0,1 | 0,5-0,5 | 40 | 945 |
| V | 27 | 66 | 12 | 20 | 0,5-0,1 | 0,5-0,5 | 40 | 1380 |
| VI | 22 | 68 | 11 | 19 | 0,5-0,1 | 0,5-0,5 | 36 | 1730 |
| | | | | | | | | |

### Herstellung der Isocyanate:

Als B-Komponente dienten die folgenden Isocyanatkompositionen. Die IsocyanatKompositionen 1 bis 5 wurden durch einfaches Mischen bei 50°C von drei Isocyanaten erhalten. Diese drei Isocyanate waren: polymeres MDI mit einem NCO-Gehalt von 31,5 Gew.-%, (Isocyanat 1,) reines 4,4-MDI (Isocyanat 2) und eine 50/50-Gewicht Mischung aus 2,4-MDI und 4,4-MDI (Isocyanat 3). Nach dem Mischen wurden die Isocyanatkompositionen auf Raumtemperatur abgekühlt und als solche verwendet.

| | Iso-Komp. 1 | Iso-Komp. 2 | Iso-Komp. 3 | Iso-Komp. 4 | Iso-Komp. 5 |
|---|---|---|---|---|---|
| Isocyanat 1 | 60 % | 50 % | 40 % | 30 % | 20 % |
| Isocyanat 2 | 0 % | 10 % | 20 % | 30 % | 40 % |
| Isocyanat 3 | 40 % | 40 % | 40 % | 40 % | 40 % |

Die Herstellung von Isocyanatprepolymeren P1 und P2 wurde wie folgt durchgeführt: Zuerst wurde eine der obengenannten Isocyanatmischungen im einem Glaskolben auf 80°C aufgeheizt. Daraufhin wurde innerhalb einer halben Stunde unter Rühren ein Glycerin-basiertes statistisch polymerisiertes Ethylenoxid-Propylenoxid-Polyether-Polyol mit einer Hydroxylzahl von 42 mg KOH/g und einem Ethylenoxid-Gehalt von 75 Gew.-% zugetropft. Das Gewichtsverhältnis von Polyol zu Isocyanat war in allen Fällen 15/85. Dieses Gemisch wurde für 2 Stunden bei 80°C gerührt. Anschließend wurde das Prepolymer abgekühlt und der NCO-Wert bestimmt.

P3 wurde hergestellt aus Isocyanat 3, nur wurde als Polyolkomponente ein Gemisch aus dem oben genannten Glycerin-basierten statistisch polymerisierten Ethylenoxid-Propylenoxid-Polyether-Polyol mit einer Hydroxylzahl von 42 mg KOH/g und einem Ethylenoxid-Gehalt von 75 Gew.-% sowie einem Glycerin-basierten Polyetherol mit einer Hydroxylzahl von 55 mg KOH/g mit einem statistisch polymerisierten Ethylenoxid-Propylenoxid-lnnenblock (EO-Anteil 5 %) und einem reinen Ethylenoxid-Endblock, wobei die Gesamtmenge an Ethylenoxide im Endblock 5,6 % der gesamten Masse beträgt, zugegeben. Das Mischungsverhältnis zwischen dem Polyol mit einer Hydroxylzahl von 42 mg KOH/g und dem Polyol mit einem Hydroxylwert von 55 mg KOH/g war 60 zu 40 und das Gewichtsverhältnis von Polyolgemisch zu Isocyanat war 12 zu 88.

| | Iso-Komp P1 | Iso-Komp P2 | Iso-Komp P3 |
|---|---|---|---|
| Isocyanat | Iso-Komp 1 | Iso-Komp 1 | Iso-Komp 1 |
| NCO Wert (%) | 26,9 | 27,1 | 28,6 |

### Herstellung der Schäume

Die Weichschäume wurden hergestellt durch Mischung einer Polyolkomponente (A-Komponente) mit einer Isocyanat-Komponente (B-Komponente) bei einer Kennzahl von 100.

Die A-Komponente bestand aus:
- 100 Teilen Polyol
- 3,2 Teilen Wasser
- 0,8 Teilen Katalysator ,Dabco^{®} 33 LV (Air Products)
- 1 Teil Stabilisator Tegostab^{®} B 8616 (Goldschmidt)

Die Polyolformulierung wurde nach Rezeptvorgabe auf einer Laborwaage beim Raumtemperatur eingewogen und bei einer Drehzahl von 1000 U/min eine halbe Stunde gerührt. Diese Mischung (A-Komponente) wurde auf Raumtemperatur abgekühlt und konnte dann verschäumt werden. Zum Verschäumen wurden die benötigten Mengen A- und B-Komponente in einen geeigneten Becher eingewogen. Optional konnte als Katalysator Dibutylzinndilaurat (DBTDL) dazugegeben werden, um der Stabilität des Schäumverfahrens zu verbessern. Die Menge an DBTBL wird in bezug auf das Polyol prozentual angegeben.

Danach wurden die Komponenten bei 1400 U/min ungefähr 7 Sekunden verrührt und die Mischung mit einer Masse von 250 g daraufhin in einen 2 Liter-Eimer gegeben. Die Startzeit, Abbindezeit und Steigzeit wurden ermittelt. Innerhalb von 30 Minuten wurden die Schäume von Hand gewalkt.

Die Schäume wurden zu Prüfkörpern zurechtgesägt und die Dichte (DIN EN ISO 8307), Luftdurchlässigkeit, Rückprallelastizität (DIN EN ISO 845) und Stauchhärte bei 40 % Stauchung (DIN EN ISO 3386) gemessen. An einigen Schäumen wurden auch Druckverformungsrest (DIN EN ISO 1856), Zugfestigkeit und Bruchdehnung (DIN EN ISO 1798) und Weiterreißwiderstand (DIN 53515) gemessen.

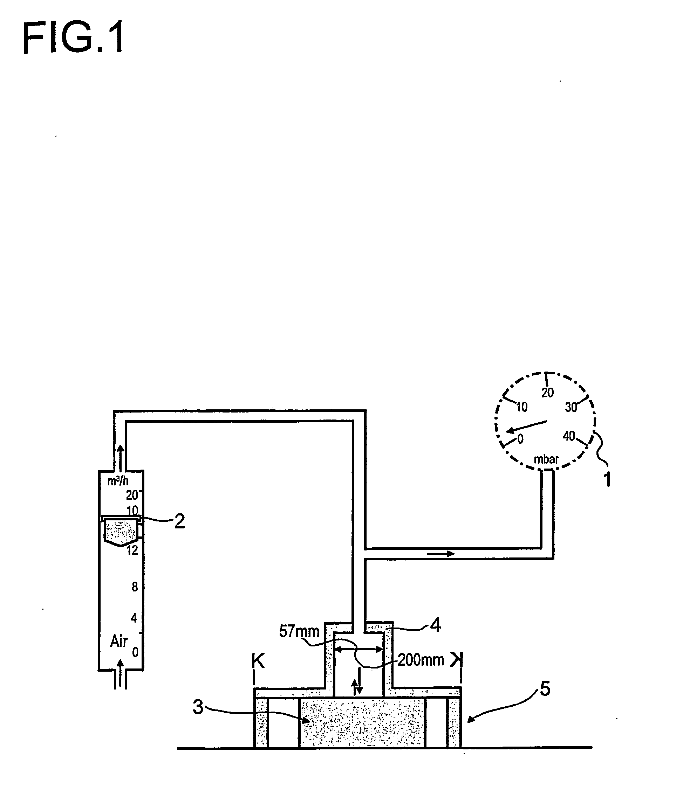

Zur Ermittlung der Luftdurchlässigkeit des Schaums wurde dessen Strömungswiderstand gegenüber einem Luftstrom gemessen. Die Abbildung 1 zeigt den Aufbau der Messapparatur. Die Luft wird 17m³/h bei 20°C auf einen Schaum-Probekörper mit der Abmessung 80x80x50mm³ geblasen. Die obere Metallplatte wird durch vier (1x1x4,5cm³) Träger gestutzt, so dass während die Messung den Schaum ca. 10 % gestaucht ist. Je nach Offenzelligkeit des Schaums geht ein bestimmter Anteil der Luft durch den Schaum hindurch. Der dabei entstehende Druck wird gemessen. Der Druck ist ein Maß für die Offenzelligkeit des Schaums. Für praktische Anwendungen sollte den Druck kleiner als 20 mbar sein. Sowohl die Polyolstruktur als auch Isocyanatkomposition haben einen großen Einfluss auf die Offenzelligkeit des Schaums. Für ein gegebenes Polyol wird die Isocyanatkomposition so gewählt, dass das Schaumdichte unterhalb 46 kg/m³ und der Strömungswiederstand unterhalb 20 mbar ist.

### Beispiel 1

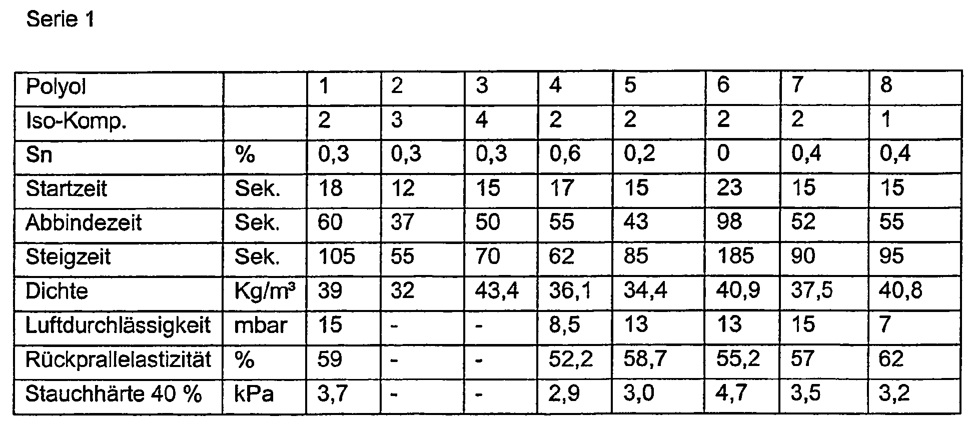

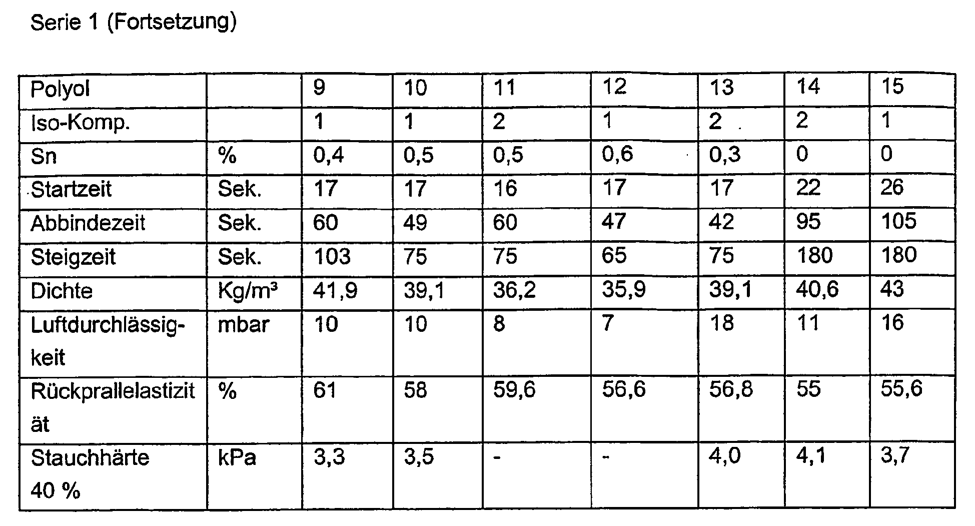

### Beispiel 2 (Anwendung von Prepolymeren in der Schaumherstellung)

**Serie 2:**

| Polyol | | 3 | 10 | 1 | 7 | 8 |
|---|---|---|---|---|---|---|
| Iso-Komp. | | P1 | P1 | P1 | P2 | P2 |
| Sn | % | 0 | 0,6 | 0,3 | 0,3 | 0,1 |
| Startzeit | Sek. | 20 | 18 | 18 | 18 | 21 |
| Abbindezeit | Sek. | 80 | 48 | 58 | 60 | 63 |
| Steigzeit | Sek. | 230 | 105 | 110 | 130 | 135 |
| Dichte | Kg/m³ | 45,3 | 38,4 | 39,3 | 38,2 | 40,5 |
| Luftdurchlässigkeit | mbar | 18 | 13 | 13 | 17 | 13 |
| Rückprallelastizität | % | 60,6 | 61,5 | 55,1 | 56,1 | 50,8 |
| Stauchhärte 40 % | kPa | - | - | - | - | - |

### Beispiel 3 (Anwendung von einem Gemisch aus Diol und Triol)

Hierbei bestand die Polyolkomponente zu 50 Gew.-Teilen aus dem dreifunktionellem Polyol 15, zu 50 Gew.-Teilen aus einem zweifunktionellem Polyol 19 zu 3,2 Gew.-Teilen Wasser, 1,0 Gew.-Teilen Tegostab^{®} B 8616 und 0,8 Gew.-Teilen Dabco^{®} 33 LV. Bei einem Index von 95 wurde die Polyolkomponente mit dem Prepolymer Iso-Komp P3 verschäumt.

Die Polyolkomponente wurde nach Rezeptvorgabe auf einer Laborwaage beim Raumtemperatur eingewogen und bei einer Drehzahl von 1000 U/min eine halbe Stunde gerührt. Die Polyolkomponente wurde auf Raumtemperatur abgekühlt und konnte dann verschäumt werden. Zum Verschäumen wurden die benötigten Mengen Polyol(A)- und Isocyanat(B)komponente in einen geeigneten Eimer eingewogen. Die gesamte Menge von A und B betrug 1300g.

Danach wurden die Komponenten bei 1500 U/min ungefähr 10 Sekunden verrührt in einem Eimer und die Mischung daraufhin in eine 40 cm*40 cm*40 cm-Kiste gegossen. Die Startzeit, Fadenziehzeit und Steigzeit wurden ermittelt.

Nach einer Aushärtungsphase von 1 bis 2 Stunden wurde der Schaum gewalkt und zu Prüfkörpern zurechtgesägt.

| Startzeit | s | 14 |
|---|---|---|
| Fadenziehzeit | s | 100 |
| Steigzeit | s | 165 |
| Luftdurchlässigkeit | mbar | 9 |
| Rückprallelastizität | % | 54 |
| Raumgewicht | kg/m³ | 41,8 |
| Stauchhärte 40 % | kPa | 2,9 |
| Druckverformungsrest | % | 3,4 |
| Zugfestigkeit | kPa | 97 |
| Bruchdehnung | % | 123 |
| Weiterreißwiderstand | N/mm | 0,54 |

### Beispiel 4 (Weichschaum unter Verwendung von TDI als Isocyanat)

Die Weichschäume wurden hergestellt durch Mischung einer Polyolkomponente (A-Komponente) mit Toluylendiisocyanat (80/20, B-Komponente) bei einer Kennzahl von 110.

Die A-Komponente bestand aus:
- 100 Teilen Polyol
- 2,25 Teilen Wasser
- 0,8 Teilen Diethanolamin
- 0,8 Teilen Stabilisator Tegostab B 8681 LF (Goldschmidt)
- 0,8 Teilen Katalysator Lupragen N201 (BASF)
- 0,05 Teilen Katalysator Lupragen N206 (BASF)
- 0,03 Teilen Dibutylzinndilaurat

Die Polyolkomponente ohne Dibutylzinnlaurat wurde nach Rezeptvorgabe auf einer Laborwaage beim Raumtemperatur eingewogen und bei einer Drehzahl von 1000 U/min eine halbe Stunde gerührt. Die A-Komponente wurde auf Raumtemperatur abgekühlt und konnte dann verschäumt werden.

Zum Verschäumen wurden 1300 g an Polyol- und Isocyanatkomponente in einen geeigneten Eimer eingewogen und die entsprechende Menge, bezogen auf die oben gegebene Rezeptur, an Dibutylzinnlaurat zugegeben.

Danach wurden die Komponenten bei 1500 U/min ungefähr 10 Sekunden verrührt und die Mischung daraufhin in eine 40 cm*40 cm*40 cm-Kiste gegossen. Die Startzeit und Steigzeit wurden ermittelt.

Nach einer Aushärtungsphase von 24 Stunden wurden die Schäume gewalkt und zu Prüfkörpern zurechtgesägt.

| Polyol | | 16 | | 17 | 18 |
|---|---|---|---|---|---|
| Startzeit | s | 8 | | 8 | 7 |
| Steigzeit | s | 120 | | 115 | 135 |
| Raumgewicht | kg/m³ | 38,4 | | 38,4 | 37,6 |
| Luftdurchlässigkeit | mbar | 20 | | 19 | 16 |
| Rückprallelastizität | % | 55 | | 55 | 56 |
| Stauchhärte 40 % | kPa | 2,8 | | 2,7 | 2,6 |
| Druckverformungsrest | % | 4,5 | | 5,8 | 4,1 |
| Zugfestigkeit | kPa | 85 | | 92 | 84 |
| Bruchdehnung | % | 192 | | 212 | 186 |
| Weiterreißwiderstand | N/mm | 0,72 | | 0,78 | 0,70 |

### Beispiel 5 (Weichschaum unter Verwendung eines Amin terminierten Polyetherpolyols)

Jeffamin T5000 ist ein aminterminiertes Polypropylenglykol der Fa. Huntsmann.

Die Polyolkomponente bestand zu 90 Gew.-Teilen aus Polyol 15, zu 10 Gew.-Teilen aus Jeffamin^{®} T5000, zu 3,2 Gew.-Teilen aus Wasser, zu 1,0 Gew.-Teilen aus Tegostab^{®} B 8616 und zu 0,8 Gew.-Teilen aus Dabco^{®} 33 LV.
Bei einem Index von 95 wurde die Polyolkomponente mit dem Prepolymer Iso-Komp P3 wie bei Beispiel 3 beschrieben verschäumt und die mechanischen Eigenschaften gemessen.

| | | |
|---|---|---|
| Startzeit | s | 14 |
| Fadenziehzeit | s | 75 |
| Steigzeit | s | 130 |
| Luftdurchlässigkeit | mbar | 19 |
| Rückprallelastizität | % | 52 |
| Rohdichte | g/L | 40,3 |

### Beispiel 6 (Weichschaum unter Verwendung eines Graft-Polyols)

Es wurde ein Polyetheralkohol verwendet, hergestellt gemäß der Vorschrift nach Beispiel 1, aus 1,65 kg Startsubstanz, an die zunächst 4,11 kg Propylenoxid und danach eine Mischung aus je 1,12 kg Ethylenoxid und Propylenoxid angelagert wurden, wobei die Dosierrate des Ethylenoxids im Verlaufe der Dosierung von 0,2 kg/h auf 1,0 kg/h gesteigert und die Dosierrate des Propylenoxids im Verlaufe der Dosierung von 1,0 kg/h auf 0,2 kg/h verringert wurde. Der Polyetheralkohol hatte eine Hydroxylzahl von 32,3 mg KOH/g, eine Viskosität bei 25°C von 919 mPa·s und einen Gehalt an primären Hydroxylgruppen von 39 % (Polyol 20).

Aus 90 Gew.-Teilen von Polyol 20, 10 Gew.-Teilen eines Graftpolyols mit einer Hydroxylzahl von 20 mg KOH/g und einem Gehalt an Feststoffen aus Styrol und Acrylnitril im Gewichtsverhältnis 1:1 von 43.5 Gew.-% (Lupranol^{®} L 4800 der BASF AG), 1,30 Gew.-Teilen 80 %-iger wässriger Triethanolaminlösung, 0,21 Gew.-Teilen Katalysator N 201 der BASF AG, 0,03 Gew.-Teilen Katalysator N 206 der BASF AG, 0,10 Gew.-Teilen Katalysator Kosmos^{®} 29 der Goldschmidt AG, 2,50 Gew.-Teilen Schaumstabilisator Tegostab® B 4380 der Goldschmidt AG und 2,50 Gew.-Teilen Wasser wurde eine Polyolkomponente hergestellt. Diese wurde bei einem Index von 95 mit dem Prepolymer 2 verschäumt. Die Formtemperatur betrug 45°C. Das entstandene Formteil hatte einen latexartigen Griff.

### Vergleichsbeispiel 1:

Gemäß des in Beispiel 1 beschriebenen Testprotokolls war es nicht möglich aus den Polyolen I bis VI durch Optimierung der Isocyanate 1 bis 5 Schäume herzustellen. In allen Fällen wurden Schäume bekommen, die entweder zu instabil oder zu geschlossenzellig waren. Im erstgenannten Fall kann es in Extremfällen zu Schaumkollaps führen, sonst führt es zu einem Schaum, der grobzellig mit deutlich höheren Dichten als erwartet war. Im zweigenannten Fall zeigten die Schäume in Extremfall Schrumpf, oder eine deutlich reduzierte Luftdurchlässigkeit. Wenn der gemessene Druckaufbau großer ist als 20 mbar beträgt, wird der Schaum als zu geschlossen beurteilt.

## Patentansprüche

1. Verfahren zur Herstellung von Polyurethan-Weichschaumstoffen, insbesondere von Polyurethan-Formweichschaumstoffen, durch Umsetzung von
a) Polyisocyanaten mit
b) Verbindungen mit mindestens zwei mit Isocyanatgruppen reaktiven Wasserstoffatomen, **dadurch gekennzeichnet, dass** als Verbindungen mit mindestens zwei mit Isocyanatgruppen reaktiven Wasserstoffatomen b) mindestens ein mittels DMC-Katalysator hergestellter Polyetheralkohol bi) mit einer Hydroxylzahl im Bereich von 15 bis 35 mg KOH/g, einem Gehalt an Ethylenoxid im Bereich von 5 bis 18 Gew.-%, bezogen auf das Gesamtgewicht des Polyetheralkohols, und einem Endblock aus Ethylenoxid und Propylenoxid mit einem Gehalt an Ethylenoxid von 25 bis 75 Gew.-%, bezogen auf die Menge des Alkylenoxids im Endblock, wobei das Masseverhältnis von Propylenoxid zu Ethylenoxid im Endblock im Verlaufe der Dosierung von 1:0,05 bis 1:2 am Beginn der Dosierung auf 1: 5 bis 1:20 am Ende der Dosierung verringert wird, eingesetzt wird.

2. Verfahren nach Anspruch 1, **dadurch gekennzeichnet, dass** bei dem Polyetheralkohol bi) der Anteil des Endblocks am Gesamtgewicht des Polyetheralkohols im Bereich zwischen 5 und 50 Gew.-%, bezogen auf das Gesamtgewicht des Polyetheralkohols, liegt.

3. Verfahren nach Anspruch 1, **dadurch gekennzeichnet, dass** der Polyetheralkohol b1) einen Gehalt an primären Hydroxylgruppen zwischen 15 und 50 Mol.-% aufweist.

4. Verfahren nach Anspruch 1, **dadurch gekennzeichnet, dass** bei dem Polyetheralkohol bi) bei der gemeinsamen Dosierung von Ethylenoxid und Propylenoxid das Mengenverhältnis der Alkylenoxide untereinander im Verlauf der Dosierung geändert wird.

5. Verfahren nach Anspruch 1, **dadurch gekennzeichnet, dass** die Verbindungen mit mindestens zwei mit Isocyanatgruppen reaktiven Wasserstoffatomen b) mindestens ein Polyol, herstellbar durch in-situ Polymerisation von ethylenisch ungesättigten Monomeren in Trägerpolyolen enthalten.

6. Verfahren nach Anspruch 1, **dadurch gekennzeichnet, dass** die Verbindungen mit mindestens zwei mit Isocyanatgruppen reaktiven Wasserstoffatomen b) mindestens einen aminterminierten Polyether enthalten.

7. Verfahren nach Anspruch 1, **dadurch gekennzeichnet, dass** als Polyisocyanate a) MDI und/oder dessen Umsetzungsprodukte mit Verbindungen mit mindestens zwei mit Isocyanatgruppen reaktiven Wasserstoffatomen eingesetzt werden.

8. Verfahren nach Anspruch 1, **dadurch gekennzeichnet, dass** als Polyisocyanat TDI eingesetzt wird.

9. Polyurethan-Weichschaumstoffe, herstellbar nach einem der Ansprüche 1 bis 8.

## Claims

1. A process for producing flexible polyurethane foams, in particular molded flexible polyurethane foams, by reacting
a) polyisocyanates with
b) compounds having at least two hydrogen atoms which are reactive toward isocyanate groups, wherein at least one polyether alcohol bi) which has been prepared by means of a DMC catalyst and has a hydroxyl number in the range from 15 to 35 mg KOH/g, an ethylene oxide content in the range from 5 to 18% by weight, based on the total weight of the polyether alcohol and an end block of ethylene oxide and propylene oxide having an ethylene oxide content of from 25 to 75% by weight, based on the amount of alkylene oxide in the end block, where the mass ratio of propylene oxide to ethylene oxide in the end block is reduced over the course of the metered addition in the preparation of the polyether alcohol bi) from 1:0.05 - 1:2 at the beginning of the metered addition to 1:5 - 1:20 at the end of the metered addition, is used as compound b) having at least two hydrogen atoms which are reactive toward isocyanate groups.

2. The process according to claim 1, wherein, in the polyether alcohol bi), the end block makes up from 5 to 50% by weight of the total weight of the polyether alcohol.

3. The process according to claim 1, wherein the polyether alcohol bi) has a content of primary hydroxyl groups of from 15 to 50 mol%.

4. The process according to claim 1, wherein, during the joint metered addition of ethylene oxide and propylene oxide in the preparation of the polyether alcohol bi), the ratio of the alkylene oxides is altered over the course of the metered addition.

5. The process according to claim 1, where the compounds b) having at least two hydrogen atoms which are reactive toward isocyanate groups comprise at least one polyol which can be prepared by in-situ polymerization of ethylenically unsaturated monomers in carrier polyols,

6. The process according to claim 1, wherein the compounds b) having at least two hydrogen atoms which are reactive toward isocyanate groups comprise at least one amine-terminated polyether.

7. The process according to claim 1, wherein MDI and/or its reaction products with compounds having at least two hydrogen atoms which are reactive toward isocyanate groups are/is used as polyisocyanates a).

8. The process according to claim 1, wherein TDI is used as polyisocyanate.

9. A flexible polyurethane foam which can be produced according to any of claims 1 to 8.

## Revendications

1. Procédé pour la préparation de mousses souples de polyuréthane, en particulier de mousses souples formées de polyuréthane, en faisant réagir des :
a) polyisocyanates avec
b) des composés avec au moins deux atomes d'hydrogène réactifs avec des groupes isocyanate, **caractérisé en ce que** comme composés avec au moins deux atomes d'hydrogène réactifs avec des groupes isocyanate b) on met en oeuvre au moins un polyéther alcool bi) préparé au moyen d'un catalyseur DMC avec un indice hydroxyle dans le domaine de 15 à 35 mg KOH/g, une teneur en oxyde d'éthylène dans le domaine de 5 à 18 % en poids, par rapport au poids total du polyéther alcool, et un bloc final d'oxyde d'éthylène et d'oxyde de propylène avec une teneur en oxyde d'éthylène de 25 à 75 % en poids, par rapport à la quantité de l'oxyde d'alkylène dans le bloc final, le rapport massique de l'oxyde de propylène à l'oxyde d'éthylène dans le bloc final étant diminué, au cours du dosage, de 1:0,05 à 1:2 au début du dosage jusqu'à 1:5 à 1:20 à la fin du dosage.

2. Procédé suivant la revendication 1, **caractérisé en ce que**, pour le polyéther alcool bi), la proportion du bloc final dans le poids total du polyéther alcool se situe dans la plage comprise entre 5 et 50 % en poids, par rapport au poids total du polyéther alcool.

3. Procédé suivant la revendication 1, **caractérisé en ce que** le polyéther alcool bi) présente une teneur en groupes hydroxyle primaires comprise entre 15 et 50 % mol.

4. Procédé suivant la revendication 1, **caractérisé en ce que**, pour le polyéther alcool bi) lors du dosage général d'oxyde d'éthylène et d'oxyde de propylène, le rapport quantitatif des oxydes d'alkylène entre eux est modifié au cours du dosage.

5. Procédé suivant la revendication 1, **caractérisé en ce que** les composés avec au moins deux atomes d'hydrogène b) réactifs aux groupes isocyanate contiennent au moins un polyol, qui peut être préparé par polymérisation in situ de monomères éthyléniquement insaturés dans des polyols porteurs.

6. Procédé suivant la revendication 1, **caractérisé en ce que** les composés avec au moins deux atomes d'hydrogène b) réactifs aux groupes isocyanate contiennent au moins un polyéther à terminaison amine.

7. Procédé suivant la revendication 1, **caractérisé en ce que**, comme polyisocyanates a), on met en oeuvre du MDI et/ou ses produits de décomposition avec des composés comprenant au moins deux atomes d'hydrogène réactifs avec des groupes isocyanate.

8. Procédé suivant la revendication 1, **caractérisé en ce qu'**on utilise du TDI comme polyisocyanate.

9. Mousses souples de polyuréthane qui peuvent être préparées selon l'une des revendications 1 à 8.
